Europäisches Patentamt

European Patent Office

Office européen des brevets

(11) Veröffentlichungsnummer: **0 405 223 A2**

## (12) EUROPÄISCHE PATENTANMELDUNG

(21) Anmeldenummer: **90111115.3**

(22) Anmeldetag: **12.06.90**

(51) Int. Cl.5: **G06F 12/08**

(30) Priorität: **26.06.89 DE 3920883**

(43) Veröffentlichungstag der Anmeldung:
**02.01.91 Patentblatt 91/01**

(84) Benannte Vertragsstaaten:
**AT BE CH DE FR GB IT LI NL**

(71) Anmelder: **Siemens Aktiengesellschaft**
**Wittelsbacherplatz 2**
**D-8000 München 2(DE)**

(72) Erfinder: **Hach, Werner, Dipl.-Ing.**
**Jahnstrasse 16**
**D-6780 Pirmasens(DE)**
Erfinder: **Vogt, Hans-Jakob, Dipl.-Ing.**
**Berwartsteinstrasse 4A**
**D-6744 Kandel(DE)**

(54) **Verfahren und Anordnung zur Erhöhung der Verarbeitungsgeschwindigkeit der Zentraleinheit einer Datenverarbeitungsanlage.**

(57) Die Erfindung betrifft ein Verfahren und eine Anordnung zur Erhöhung der Verarbeitungsgeschwindigkeit der Zentraleinheit einer Datenverarbeitungsanlage, wobei die Zentraleinheit einen Zentralspeicher (ZP) und einen Pufferspeicher (PU) (Cache) aufweist. Die Dauer eines Arbeitszyklus mit Speicherzugriff ist größer als die Dauer eines Arbeitszyklus ohne Speicherzugriff, was sich nachteilig auf die Verarbeitungsgeschwindigkeit der Zentraleinheit auswirkt. Eine Erhöhung der Verarbeitungsgeschwindigkeit einer Zentraleinheit wird auf einfache Weise dadurch erreicht, daß in einer ersten Betriebsart, in der Daten in dem Pufferspeicher (PU) abgelegt sind, die Daten nach einem Speicherzugriffszyklus und in einer zweiten Betriebsart, in der Daten in dem Hauptspeicher (HS) abgelegt sind, die Daten während einem dem Speicherzugriffszyklus folgenden Verarbeitungszyklus dem Zentralprozessor (ZP) zur Verarbeitung bereitgestellt werden.

Die Erfindung wird insbesondere in Datenverarbeitungsanlagen angewandt.

FIG 1

Xerox Copy Centre

## VERFAHREN UND ANORDNUNG ZUR ERHÖHUNG DER VERARBEITUNGSGESCHWINDIGKEIT DER ZENTRALEINHEIT EINER DATENVERARBEITUNGSANLAGE

Die Erfindung betrifft ein Verfahren und eine Anordnung zur Erhöhung der Verarbeitungsgeschwindigkeit einer Zentraleinheit gemäß dem Oberbegriff der Ansprüche 1 und 6.

Damit eine Zentraleinheit eine hohe Verarbeitungsgeschwindigkeit erreicht, ist es erforderlich, die Dauer der Arbeitszyklen, die aus den Maschinenzyklen abgeleitet werden, gering zu halten. Es gibt zwei Arten von Arbeitszyklen, solche ohne Hauptspeicherzugriffe und solche mit Hauptspeicherzugriffen. Die Dauer eines Arbeitszyklus ohne Hauptspeicherzugriff richtet sich ausschließlich nach den internen Laufzeiten der Zentraleinheit und kann in der Regel kurz gehalten werden.

Die Zugriffszeit auf einen Hauptspeicher, der aus üblichen dynamischen Speichern aufgebaut ist, beträgt ein Mehrfaches der Dauer eines Arbeitszyklus ohne Speicherzugriff, was bedeutet, daß die Dauer eines Arbeitszyklus mit Speicherzugriff größer ist, was sich nachteilig auf die Verarbeitungsgeschwindigkeit der Zentraleinheit auswirkt.

Um die Zugriffszeit auf einen Hauptspeicher zu verkürzen, ist es möglich, beispielsweise einen aus Müller/Löbel/Schmitt "Lexikon der Datenverarbeitung", MI-Verlag, 1988, 10. Auflage, Seiten 129 bis 132, bekannten Pufferspeicher (Cache) zwischen dem Hauptspeicher und einem Zentralprozessor der Zentraleinheit anzuordnen. Die Zugriffszeit des Zentralprozessors auf diesen Pufferspeicher ist so gering, daß ein Arbeitszyklus mit Speicherzugriff unwesentlich länger ist als ein Arbeitszyklus ohne Speicherzugriff. Dies setzt allerdings voraus, daß alle benötigten Daten im Pufferspeicher hinterlegt sind. Diese Voraussetzung ist nicht immer erfüllt, da bekanntlich die Größe des Pufferspeichers erheblich kleiner ist als die des Hauptspei chers. Die im Pufferspeicher nicht vorhandenen Daten müssen zunächst aus dem Hauptspeicher geholt werden, wozu eine zeitliche Verlängerung des Arbeitszyklus erforderlich ist.

Dies kann dadurch ermöglicht werden, daß z. B. eine einen für den Speicherzugriff benötigten Arbeitszyklus (Speicherzugriffszyklus) abschließende positive Taktflanke zunächst unterdrückt wird, bis benötigte, im Hauptspeicher abgelegte Daten im Pufferspeicher bereitgestellt sind. Dabei wirkt sich allerdings nachteilig aus, daß Maßnahmen vorgesehen werden müssen, um zu entscheiden, ob die Taktflanke, je nachdem, ob die gewünschten Daten im Hauptspeicher oder im Pufferspeicher liegen, unterdrückt oder nicht unterdrückt werden muß. Das bedeutet, der Speicherzugriffszyklus muß, unabhängig wo die gewünschten Daten hinterlegt sind, um eine gewisse Zeitspanne verlängert werden, die für eine Entscheidung "Taktflanke unterdrücken" oder "nicht unterdrücken" benötigt wird. Dadurch wird die Verarbeitungsgeschwindigkeit herabgesetzt.

Der vorliegenden Erfindung liegt daher die Aufgabe zugrunde, mit einem Verfahren und einer Anordnung der eingangs genannten Art eine Erhöhung der Verarbeitungsgeschwindigkeit einer Zentraleinheit auf einfache Weise zu erreichen.

Diese Aufgabe wird durch die im kennzeichnenden Teil des Anspruchs 1 angegebenen Maßnahmen sowie durch die im Kennzeichen des Anspruchs 6 vorhandenen Merkmale gelöst.

Dabei ist es vorteilhaft, daß ein Speicherzugriffszyklus nicht verlängert werden muß. Unabhängig davon, ob gewünschte Daten bereits im Pufferspeicher bereitstehen oder noch im Hauptspeicher liegen, wird der Speicherzugriffszyklus abgeschlossen. Falls die Daten im Pufferspeicher vorhanden sind, können diese unmittelbar während dem dem Speicherzugriffszyklus folgenden Arbeitszyklus für die weitere Verarbeitung (Verarbeitungszyklus) bearbeitet werden. Liegen die gewünschten Daten im Hauptspeicher, so wird der Speicherzugriffszyklus wie üblich abgeschlossen, z. B. durch eine diesen Arbeitszyklus abschließende positive Taktflanke. Dem Zentralprozessor werden Daten während dem auf den Speicherzugriffszyklus folgenden Verarbeitungszyklus bereitgestellt.

Weitere vorteilhafte Ausgestaltungen der Erfindung ergeben sich aus den Unteransprüchen.

Anhand der Zeichnung wird ein Ausführungsbeispiel der Erfindung näher erläutert.

Es zeigen

Figur 1 ein Blockschaltbild eines Ausführungsbeispiels der erfindungsgemäßen Anordnung,

Figur 2 ein Zeitdiagramm der an der Zykluslängensteuerung gemäß Figur 1 anliegenden Signale,

Figur 3 eine Anordnung zur Adressierung des Puffer- und des Hauptspeichers gemäß Figur 1 und

Figur 4 eine Anordnung zur Steuerung des Zentralprozessors gemäß Figur 1.

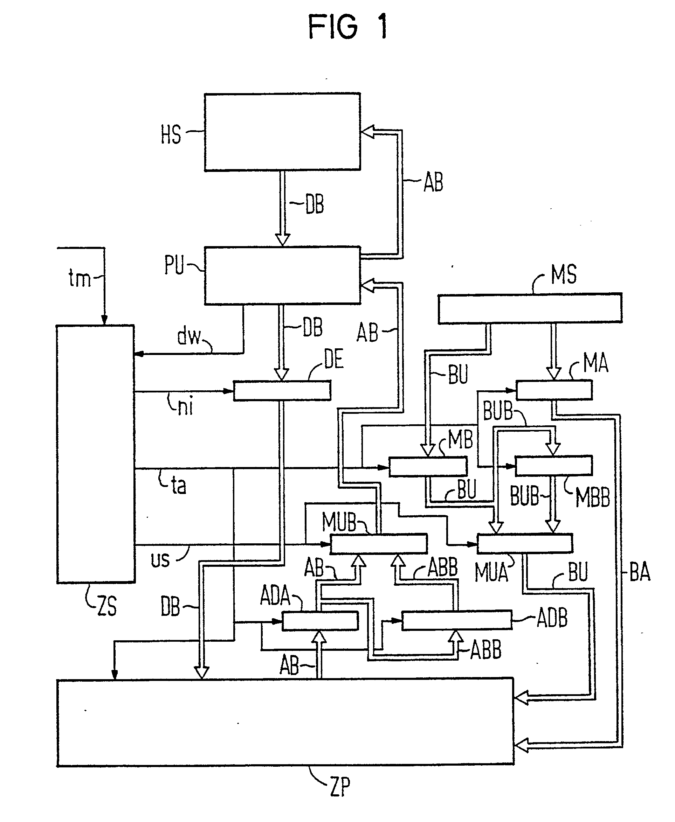

Figur 1 zeigt ein Blockschaltbild der Zentraleinheit einer Datenverarbeitungsanlage. Mit ZP ist ein Zentralprozessor als Bestandteil der Zentraleinheit bezeichnet, in dem arithmetische Operationen und Steuerfunktionen ausgeführt werden. Zwischen einem Hauptspeicher HS und dem Zentralprozessor ZP ist ein Pufferspeicher PU und ein Dateneingangsregister DE angeordnet. In dieses Dateneingangsregister DE werden Daten geladen, die vom Pufferspeicher PU oder Hauptspeicher HS dem Zentralprozessor ZP bereitgestellt werden. Der Zentralprozessor ZP, das Dateneingangsregister DE, der Pufferspeicher PU und der Hauptspeicher HS sind über einen Datenbus DB miteinander verbunden. In einem Mikroprogrammspeicher MS ist ein Mikroprogramm hinterlegt, das den Zentralprozessor ZP steuert. Dem Mikroprogrammspeicher MS sind ein erstes Mikrobefehlsregister MA und ein zweites Mikrobefehlsregister MB nachgeschaltet, in denen Steuerdaten des Mikroprogramms hinterlegt werden. Das zweite Mikrobefehlsregister MB speichert Steuerdaten des Mikroprogramms, die für Speicherzugriffe benötigt werden, das erste Mikrobefehlsregister MA die restlichen Steuerdaten des Mikroprogramms. Ein erster Multiplexer MUA verbindet das zweite Mikrobefehlsregister MB und ein diesem Mikrobefehlsregister MB nachgeschaltetes drittes Mikrobefehlsregister MBB mit dem Zentralprozessor ZP. Das erste Mikrobefehlsregister MA ist direkt über eine Busleitung BA an den Zentralprozessor ZP angeschlossen. Der Mikroprogrammspeicher MS, das zweite Mikrobefehlsregister MB, der erste Multiplexer MUA und der Zentralprozessor ZP sind über eine Busleitung BU, das zweite Mikrobefehlsregister MB, das dritte Mikrobefehlsregister MBB und der erste Multiplexer MUA über eine Busleitung BUB gekoppelt. Zugriffsadressen zum Adressieren des Hauptspeichers HS und des Pufferspeichers PU werden vom Zentralprozessor ZP einem ersten Adreßregister ADA zugeführt, dem ein zweites Adreßregister ADB nachgeschaltet ist. Die Adreßregister ADA und ADB sind über einen zweiten Multiplexer MUB an den Pufferspeicher PU angeschlossen, der die Zugriffsadressen dem Hauptspeicher HS bereitstellt, falls die adressierten Daten nicht im Pufferspeicher PU, sondern im Hauptspeicher HS hinterlegt sind.

Der Zentralprozessor ZP, das erste Adreßregister ADA, der zweite Multiplexer MUB, der Pufferspeicher PU und der Hauptspeicher HS sind über einen ersten Adreßbus AB verbunden. Das erste Adreßregister ADA, das zweite Adreßregister ADB und der zweite Multiplexer MUB sind über einen internen Adreßbus ABB verkettet.

Eine Zykluslängensteuerung ZS erzeugt aus einem ihr zugeführten Maschinentakt tm einen Arbeitstakt ta, der von der Zykluslängensteuerung ZS während eines Verarbeitungszyklus dann unterdrückt wird, falls angeforderte Daten nicht im Pufferspeicher PU vorhanden sind. Die Zykluslängensteuerung ZS empfängt von dem Pufferspeicher PU ein Signal dw mit der Information, ob die von dem Zentralprozessor ZP angeforderten Daten im Pufferspeicher PU vorhanden sind oder nicht. Ein Nachladesignal ni, das bewirkt, daß die vom Hauptspeicher HS in den Pufferspeicher PU geladenen Daten in das Dateneingangsregister DE nachgeladen werden, und ein Umschaltsignal us, das die Multiplexer MUA und MUB steuert, werden von der Zugriffssteuerung ZS erzeugt und werden im folgenden erläutert.

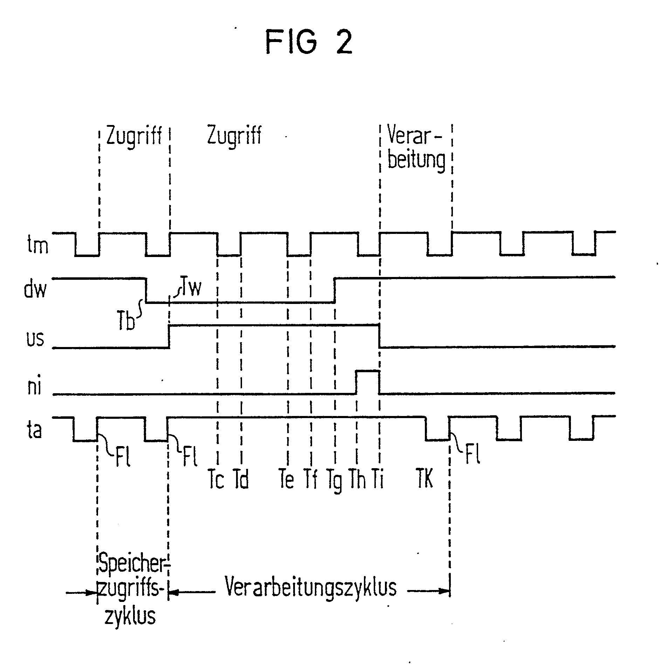

Figur 2 zeigt ein Zeitdiagramm der an der Zykluslängensteuerung ZS gemäß Figur 1 anliegenden Signale. Die Bezugzeichen der Signale entsprechen den Bezugzeichen in Figur 1.

Es wird vorausgesetzt, daß ein Arbeitszyklus durch eine positive Taktflanke F1 des Arbeitstaktes ta abgeschlossen wird. Der Arbeitstakt ta wird von der Zykluslängensteuerung ZS aus dem Maschinentakt tm abgeleitet, die mit dem Arbeitstakt ta einen Arbeitszyklus jeweils für den Speicherzugriffs- und den Verarbeitungszyklus steuert. Vor einem Zeitpunkt Tb während eines Speicherzugriffszyklus ist das Signal dw aktiv, was darauf hinweist, daß von dem Zentralprozessor ZP angeforderte Daten bereits in einem Pufferspeicher PU vorhanden sind. Zum Zeitpunkt Tb wird das Signal dw inaktiv, weil die angeforderten Daten nicht mehr im Pufferspeicher PU, sondern im Hauptspeicher HS gespeichert sind. Das bedeutet, daß dem Zentralprozessor ZP nach Beendigung des Speicherzugriffszyklus zum Zeitpunkt Tw die angeforderten Daten nicht bereitgestellt werden können. Der Speicherzugriffszyklus wird durch eine positive Taktflanke F1 zum Zeitpunkt Tw beendet. Wären die angeforderten Daten während des gesamten Speicherzugriffszyklus noch im Pufferspeicher PU hinterlegt und somit das Signal dw aktiv, so würden diese Daten zum Zeitpunkt Tw dem Zentralprozessor ZP zur weiteren Bearbeitung zur Verfügung stehen. Dies besagt, daß unmittelbar nach Abschluß des Speicherzugriffszyklus die angeforderten Daten weiterverarbeitet werden könnten, was eine Erhöhung der Verarbeitungsgeschwindigkeit bedeutet.

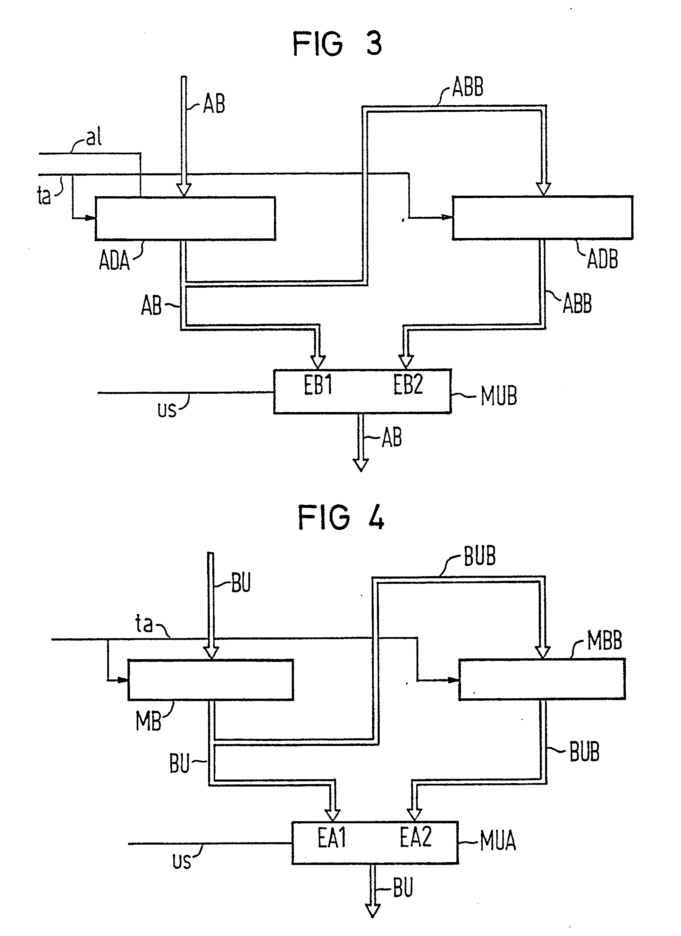

Nach der den Speicherzugriffszyklus abschließenden Taktflanke F1 zum Zeitpunkt Tw beginnt der Verarbeitungszyklus. Die Zykluslängensteuerung ZS erzeugt während diesem Verarbeitungszyklus das Umschaltsignal us und das Nachladesignal ni und unterdrückt den Arbeitstakt ta, d. h., im Ausführungsbeispiel bleibt dieser zunächst aktiv, er wechselt nicht zu den Zeitpunkten Tc, Te von aktiv zu inaktiv und zu den Zeitpunkten Td, Tf von inaktiv zu aktiv. Dies bewirkt, daß der Verarbeitungszyklus vergrößert und zunächst nicht abgeschlossen wird. Das aktive Umschaltsignal us bewirkt, daß der zweite Multiplexer MUB (Figur 1) nicht die Adresse des ersten Adreßregisters ADA, sondern die des zweiten Adreßregisters ADB an den Pufferspeicher PU legt und daß der erste Multiplexer MUA nicht die Steuerinformation des zweiten Mikrobefehlsregisters MB, sondern die des dritten Mikrobefehlsregisters MBB an den Zentralprozessor ZP durchschaltet. Die Arbeits- und Wirkungsweise der Adreßregister ADA, ADB und der Mikrobefehlsregister MB und MBB werden anhand der Figuren 3 und 4 näher erläutert. Während des Verarbeitungszyklus wird zu einem Zeitpunkt Tg das Signal dw wieder aktiv (Figur 2), d. h., die angeforderten Daten wurden vom Hauptspeicher HS in den Pufferspeicher PU übertragen. Die Zykluslängensteuerung ZS erzeugt daraufhin zu einem Zeitpunkt Th das Nachladesignal ni, was bewirkt, daß die angeforderten, in den Pufferspeicher PU übertragenen Daten in das Dateneingangsregister DE geladen werden und zu einem Zeitpunkt Ti zur Verarbeitung bereitstehen. Eine Maschinentaktperiode später erzeugt die Zykluslängensteuerung ZS eine positive Taktflanke F1 zu einem Zeitpunkt Tk, die den Verarbeitungszyklus abschließt.

Eine Vergrößerung eines Arbeitszyklus findet also nur dann statt, falls die vom Zentralprozessor ZP angeforderten Daten im Hauptspeicher HS abgelegt sind. In diesem Fall wird der Verarbeitungszyklus um eine für die Übertragung der angeforderten Daten vom Hauptspeicher HS in den Pufferspeicher PU und Bereitstellung im Dateneingangsregister DE notwendige Zeitspanne verlängert.

Figur 3 zeigt eine Anordnung zur Adressierung des Puffer- und des Hauptspeichers PU, HS. Die hier benutzten, Bezugszeichen entsprechen denen in Figur 1.

Zur Vervollständigung ist ein in Figur 1 nicht dargestelltes Ladesignal al zusätzlich aufgeführt, welches das zweite Mikrobefehlsregister MB dem ersten Adreßregister ADA zuführt. Der Ausgang des ersten Adreßregisters ADA ist mit dem Eingang des zweiten Adreßregisters ADB über den internen Adreßbus ABB und mit einem Eingang EB1 des zweiten Multiplexers MUB über den Adreßbus AB verbunden. Sst der Verarbeitungstakt ta aktiv und liegt eine entsprechende Steueranweisung des Mikroprogramms vor, so ist das Ladesignal al aktiv, was bewirkt, daß das erste Adreßregister ADA mit der Zugriffsadresse für den Pufferspeicher PU bzw. den Hauptspeicher HS geladen wird. Diese Zugriffsadresse liegt während eines Speicherzugriffszyklus am Eingang EB1 des zweiten Multiplexers MUB und am zweiten Adreßregister ADB an. Eine den Speicherzugriffszyklus abschließende Taktflanke F1 bewirkt, daß die Zugriffsadresse des ersten Adreßregisters ADA in das zweite Adreßregister ADB geladen wird. Wie bereits beschrieben, erfolgt der Speicherzugriff für den Fall, daß die benötigten Daten nicht im Pufferspeicher PU vorhanden sind während dem dem Speicherzugriffszyklus folgenden Verarbeitungszyklus. Es ist nun möglich, daß mit der den Speicherzugriffszyklus abschließenden Taktflanke F1 das erste Adreßregister ADA bereits neu geladen wurde. Das bedeutet, daß bei einem Speicherzugriff während des Verarbeitungszyklus Maßnahmen vorgesehen werden müssen, damit die vor dem Verarbeitungszyklus gültige Adresse für den Speicherzugriff während dem Verarbeitungszyklus vorliegt. Für diesen Fall ist das Umschaltsignal us aktiv, z. B. in der Zeitspanne zwischen dem Zeittakt Tw und Ti (Figur 2), wodurch der zweite Multiplexer MUB die an seinem Eingang EB2 anliegende Adresse dem Pufferspeicher PU und somit dem Hauptspeicher HS durchschaltet. Diese in dem zweiten Adreßregister ADB gespeicherte Adresse stellt die vor dem Verarbeitungszyklus gültige Speicherzugriffsadresse dar. Der zweite Multiplexer MUB schaltet erst dann wieder die im ersten Adreßregister ADA hinterlegte Adresse auf den Pufferspeicher PU, falls das Umschaltsignal us inaktiv wird, d. h., falls die angeforderten Daten vom Hauptspeicher HS geholt und durch das Nachladesignal ni in das Dateneingangsregister DE geladen wurden.

Figur 4 zeigt eine Anordnung zur Steuerung des Zentralprozessors ZP. Die aufgeführten Bezugszeichen entsprechen denen in Figur 1.

In dem zweiten Mikrobefehlsregister MB sind die Steuerinformationen für den aktuellen Speicherzugriffszyklus, im dritten Mikrobefehlsregister MBB die Steuerinformationen für den vorausgegangenen Speicherzugriffszyklus hinterlegt. War nun dieser vorausgegangene Speicherzugriffszyklus ein Zugriffszyklus, in dem die angeforderten Daten nicht im Pufferspeicher PU vorhanden waren, so schaltet der erste Multiplexer MUA aufgrund des aktiven Umschaltsignals us während des Verarbeitungszyklus, z. B. zum Zeitpunkt Tw (Figur 2), auf seinen Eingang EA2. Dies bewirkt, daß die Steuerinformation des dritten Mikrobefehlsregisters MBB dem Zentralprozessor ZP aufgeschaltet wird. Wird schließlich das Umschaltsignal us wieder inaktiv, weil die angeforderten Daten im Dateneingangsregister DE vorliegen, so schaltet der erste Multiplexer MUA die aktuelle Steuerinformation des zweiten Mikrobefehlsregisters MB auf den Zentralprozessor ZP.

## Ansprüche

1. Verfahren zur Erhöhung der Verarbeitungsgeschwindigkeit der Zentraleinheit einer Datenverarbeitungsanlage, wobei die Zentraleinheit einen Zentralprozessor (ZP) und einen Pufferspeicher (PU) (Cache) aufweist, der zwischen den Zentralprozessor (ZP) und einen Hauptspeicher (HS) geschaltet ist, **dadurch gekennzeichnet,** daß
- in einer ersten Betriebsart, in der Daten in dem Pufferspeicher (PU) abgelegt sind, Daten nach einem Speicherzugriffszyklus dem Zentralprozessor (ZP) zur Verarbeitung bereitgestellt werden und
- in einer zweiten Betriebsart, in der Daten in dem Hauptspeicher (HS) abgelegt sind, Daten während einem dem Speicherzugriffszyklus folgenden Verarbeitungszyklus dem Zentralprozessor (ZP) zur Verarbeitung bereitgestellt werden.

2. Verfahren nach Anspruch 1, **gekennzeichnet durch**

- eine Zykluslängensteuerung (ZS), die einen Arbeitstakt (ta) erzeugt und in der zweiten Betriebsart den Arbeitstakt (ta) während des Verarbeitungszyklus so lange unterdrückt, bis die Daten vom Hauptspeicher (HS) in den Pufferspeicher (PV) übertragen und durch ein von der Zykluslängensteuerung (ZS) erzeugtes Nachladesignal (ni) in das dem Pufferspeicher (PU) nachgeschaltete Dateneingangsregister (DE) hinterlegt und dem Zentralprozessor (ZP) bereitgestellt werden.

3. Verfahren nach Anspruch 2, **dadurch gekennzeichnet, daß**

- die Zykluslängensteuerung (ZS) mit dem Arbeitstakt (ta) einen ersten und einen zweiten Multiplexer (MUA, MUB) derart steuert, daß

- in der ersten Betriebsart die aktuelle, in einem ersten Adreßregister (ADA) hinterlegte Adresse zum Adressieren der Speicher (PU, HS) und die aktuelle, im zweiten Mikrobefehlsregister (MB) hinterlegte Steuerinformation für den Zentralprozessor (ZP) und

- in der zweiten Betriebsart die der aktuellen Adresse vorausgegangene, im zweiten Adreßregister (ADB) hinterlegte Adresse und die der aktuellen Steuerinformation vorausgegangene, im dritten Mikrobefehlsregister (MBB) hinterlegte Steuerinformation

bereitgestellt werden.

4. Verfahren nach Anspruch 3, **dadurch gekennzeichnet, daß**

- die Zykluslängensteuerung (ZS) von dem Pufferspeicher (PU) über ein Signal (dw) die Information empfängt, in welchem Speicher (PU, HS) das angeforderte Datum hinterlegt ist.

5. Verfahren nach Anspruch 4, **dadurch gekennzeichnet, daß**

- die Zykluslängensteuerung den Arbeitstakt (ta) aus einem Maschinentakt (tm) ableitet.

6. Anordnung zur Durchführung des Verfahrens nach einem der vorhergehenden Ansprüche, **dadurch gekennzeichnet, daß**

- dem Zentralprozessor (ZP) ein erstes Adreßregister (ADA) nachgeschaltet ist, dem ein zweites Adreßregister (ADB) nachgeordnet ist,

- die jeweiligen Ausgänge des ersten und zweiten Adreßregisters (ADA, ADB) mit dem zweiten Multiplexer (MUB) verbunden sind, der dem Pufferspeicher (PU) vorgeschaltet ist,

- dem Zentralprozessor (ZP) ein erster Multiplexer (MUA) vorgeschaltet ist, an dessen erstem Eingang (EA1) ein zweites Mikrobefehlsregister (MB) und an dessen zweitem Eingang (EA2) ein drittes Mikrobefehlsregister (MBB) angeschlossen ist,

- der erste und zweite Multiplexer (MUA, MUB) sowie der Zentralprozessor (ZP), der Pufferspeicher (PU) und ein dem Pufferspeicher nachgeschaltetes Dateneingangsreglster (DE) mit der Zykluslängensteuerung (ZS) gekoppelt sind.

# FIG 1

# FIG 2

# FIG 3

# FIG 4